# EUROPÄISCHE PATENTSCHRIFT

(11) **EP 0 303 899 B1**
(45) Veröffentlichungstag und Bekanntmachung des Hinweises auf die Patenterteilung: **20.10.1993**
(21) Anmeldenummer: 88112664.3
(22) Anmeldetag: 04.08.1988
(51) Int. Cl.: A01D 41/12, G01G 17/00, G01F 23/00, G01G 9/00

(54) **Vorrichtung zum Ermitteln der Masse eines Guts**
Apparatus for the determination of the mass of an article
Dispositif de détermination de la masse d'une marchandise

(30) Priorität: 13.08.1987 DE 3726930
(43) Veröffentlichungstag der Anmeldung: 22.02.1989
(73) Patentinhaber: DEERE & COMPANY, Moline, Illinois 61265 (US)
(72) Erfinder: Von Meltzing, Wolfgang, D-6653 Bierbach (DE)
(74) Vertreter: Feldmann, Bernhard

(56) Entgegenhaltungen:
- EP-A- 0 129 613
- US-A- 4 296 409
- US-A- 4 527 241

## Beschreibung

Die Erfindung betrifft ein Verfahren zum Ermitteln der Masse eines Guts, insbesondere bei Erntemaschinen.

Es ist bei Erntemaschinen, und zwar insbesondere bei Mähdreschern, bekannt, das Volumen des geernteten Guts zu erfassen, sh. Yield-Trak, Harvest Monitor, Fa. Günter Grauer-Carstensen, 2000 Hamburg 71. Hierzu wird z. B. anhand der Anzahl von Umdrehungen einer Förderschnecke und pro Förderdauer das Fördervolumen ermittelt. Oder es wird mittels Drucksensorplatten am Auslauf einer Förderschnecke durch Erfassung des Strömungsdruckes ein Anhaltswert für die Größe des Volumenstromes gebildet. Schließlich ist es bekannt, Wägezellen am Ein- oder Auslauf eines Gutbehälters anzubringen, die das geförderte Volumen und gegebenenfalls auch dessen Gewicht, d. h. dessen Masse, ermitteln.

Diese bekannten Vorrichtungen ermöglichen es meist aber nur, das Volumen eines geförderten Guts zu erfassen, und es sind daran anschließend Eichvorgänge erforderlich, die einen Rückschluß auf die geförderte Masse bzw. deren Gewicht ergeben. Für einen derartigen Eichvorgang ist es erforderlich, das Gut auf einer Waage zu wiegen, wozu es normalerweise von dem Ernteort zu einer Brückenwaage oder dergleichen weggebracht werden muß. Der Eichvorgang muß für jedes geerntete Gut bei unterschiedlichen Feuchtegraden durchgeführt werden. Es ist ersichtlich, daß derartige Eichprozeduren zeitaufwendig sind und nur bei sehr sorgfältiger Durchführung und Anwendung brauchbare Ergebnisse liefern.

Andererseits besteht aber ein zunehmendes Interesse von Lohnunternehmern und Kunden, auf einfache und schnelle Weise die Erträge pro Fläche oder den Maschinendurchsatz pro Zeit zu erfahren, und zwar insbesondere dann, wenn das geerntete Gut nach dem Erntevorgang nicht direkt zu einer Mühle oder einer anderen Weiterbearbeitungsstätte, in der es gewogen wird, sondern zu einer Zwischenlagerstätte gebracht wird.

Des weiteren offenbart die US-A-4,296,409 einen Monitor für einen Mähdrescher mit einer Eingabeeinheit, mit deren Hilfe es möglich ist, die abgeerntete Fläche, die Erntezeit, Getreideverluste und Betriebsbedingungen des Mähdreschers zu erfassen und anzuzeigen. Insbesondere zur Anzeige der Fläche sind Vorkehrungen getroffen, die Reifengröße und die Schnittbreite als konstante Größen in einen Rechner über die Eingabeeinheit einzugeben.

Die der Erfindung zugrunde liegende Aufgabe wird darin gesehen, ein Verfahren zum Ermitteln der Masse eines Guts, insbesondere bei Erntemaschinen, zu entwickeln, das bei geringem Zeit- und Kostenaufwand sowie bei leichter Handhabung eine genaue Angabe über die Masse erlaubt, aus der Ernteerträge pro Fläche, pro Zeit oder dergleichen, errechnet werden können.

Diese Aufgabe ist gemäß der Lehre von Patentanspruch 1 gelöst worden, und in den Unteransprüchen werden vorteilhafte Weiterentwicklungen angegeben.

Gemäß Patentanspruch 1 werden die gutspezifischen Angaben extern und unabhängig von dem Ernte- oder sonstigen Bergevorgang ermittelt, z. B. von einem Hersteller dieser Vorrichtung, von dem Erntemaschinenhersteller, von einem Institut, einem Softwarehersteller oder dergleichen. Die Ermittlung dieser Daten, also insbesondere der Dichte der ausgewählten Güter, kann ohne Zeitdruck und durch Fachpersonal mittels geeigneter Instrumente erfolgen, so daß diese Angaben sehr genau sind und alle möglichen Einflußfaktoren, wie die Gutfeuchte, Unterschiede in den Schüttwinkelgrößen, die Gutverschmutzung, die Gutmischung und die verschiedensten Gutvarianten, berücksichtigt werden können. Alle diese gutspezifischen Angaben können mittels einer Magnetkarte oder einem anderen Datenträger in den Speicher eingelesen und/oder in diesem dauerhaft installiert werden. Einer der wichtigsten Einflußfaktoren auf die Masse, d. h. das Gewicht des Guts, ist die Gutfeuchte, die oft auch in weiten Grenzen variiert. Die Gutfeuchte kann aber mittels Handgeräten vor Ort schnell und zuverlässig ermittelt werden; Fachleute können diese auch mit der bloßen Hand sehr zuverlässig schätzen. Die derart ermittelte Gutfeuchte kann dann manuell in den Rechner eingegeben werden.

Eine automatische Verwertung der Angabe über die geerntete Masse ist möglich, wenn auch die Erntefläche erfaßt und dazu in Beziehung gesetzt wird.

Alternativ zu der Schätzung der Gutfeuchte kann in dem Gutbehälter ein Sensor vorgesehen werden, der automatisch ein die Gutfeuchte repräsentierendes Eingangssignal an den Rechner gibt.

Da sich jeder Ernte- oder Bergevorgang von einem anderen unterscheidet und somit automatisch errechnete Größen, wie z. B. die Fläche, nicht der wirklich abgeernteten Fläche entsprechen müssen - etwa weil die Schnittbreite eines Mähdrescherschneidwerks nicht voll ausgenutzt wurde -, ist ein Korrekturkreis vorgesehen, mit dem die theoretisch ermittelte Flächengröße mit der tatsächlich abgeernteten in Einklang gebracht werden kann. Ein derartiger Korrekturkreis erlaubt es auch, bei einem Entladevorgang des Gutbehälters "on-the-go", also während der Fahrt, oder bei noch vorhandenen Rest-Gutvolumina oder der gleichen Irritationen des Füllstandssensors zu korrigieren.

Auf eine sehr einfache und äußerst kostengünstige Weise wird das Volumen des Guts mittels eines Füllstandssensors in dem Gutbehälter erfaßt. Füllstandssensoren und Füllstandsanzeiger sind bei heutigen Erntemaschinen für die rein informative Anzeige des Inhalts des Gutbehälters an einem Instrumentenbrett standardmäßig vorgesehen, so daß deren Signale für den Zweck der Massenermittlung mitbenutzt werden können, ohne zusätzliche Kosten zu verursachen. Insbesondere über die für jedes Gut spezifische Schüttkegelgröße kann in dem Rechner das Volumen sehr genau errechnet werden. Es ist dabei unerheblich, ob der Füllstandssensor den Inhalt des Gutbehälters stufenlos oder aber in Schritten, wie z. B. 1/4, 1/2, 3/4 und 1/1, ermittelt.

Ein wesentlicher Vorteil der erfindungsgemäßen Vorrichtung ist auch darin zu sehen, daß zur Volumenerfassung grundsätzlich der Inhalt eines vollen Gutbehälters herangezogen wird, so daß z. B. bei einem Korntankvolumen von 8000 Litern eines Großmähdreschers wenige Massenbestimmungen stattfinden und sich somit mögliche Abweichungen geringfügig auswirken. Im Gegensatz hierzu ist die Fehlermöglichkeit beim oftmaligen Erfassen des Volumens, z. B. über die Anzahl der Umdrehungen einer Förderschnecke, insbesondere im Hinblick auf die jeweiligen Füllgrade, ungleich höher.

Ein Hauptanwendungsgebiet für derartige Vorrichtungen sind insbesondere Mähdrescher; allerdings können diese Vorrichtungen auch zur Massenermittlung an Rübenvollerntern, an Kartoffel-, Trauben-, Erbsen- und Karottenvollerntern oder dergleichen, an Ladewagen, an Erdbewegungsmaschinen, wie Baggern, an Tankwagen und vielem mehr verwendet werden.

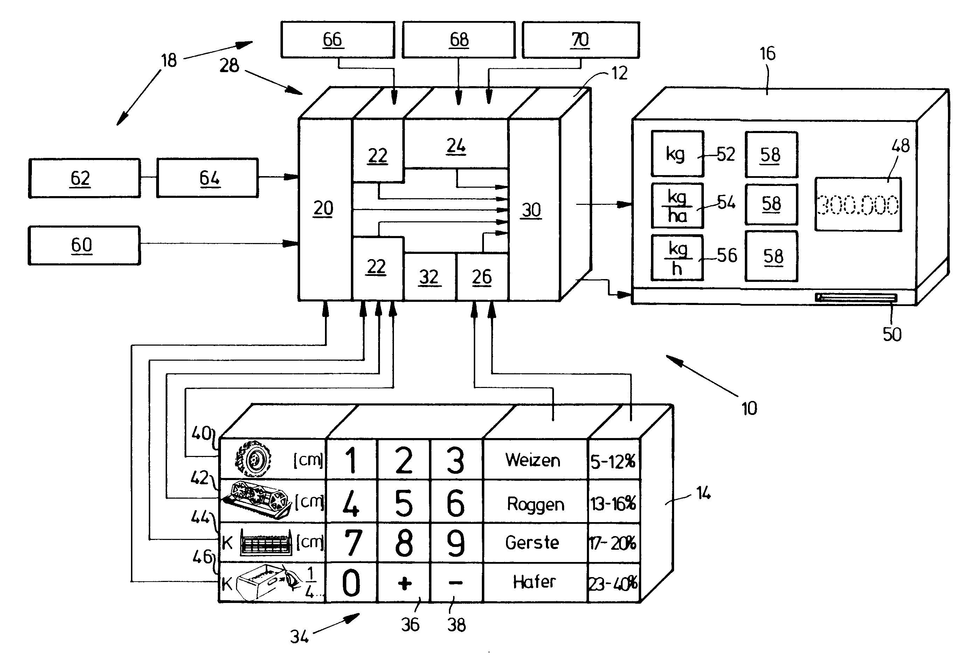

In der Zeichnung ist ein nachstehend näher beschriebenes Ausführungsbeispiel der Erfindung anhand eines Schemabildes dargestellt. Ein derartiges Schemabild stellt bereits die Grundlage für die Erstellung einer anwenderspezifischen Software für den Rechner der erfindungsgemäßen Vorrichtung dar.

Eine erfindungsgemäße Vorrichtung 10 zum Ermitteln der Masse eines Guts enthält im wesentlichen einen Rechner 12, eine manuelle Eingabeeinheit 14, eine Ausgabeeinheit 16 und Sensoren 18 und kann außer den Sensoren 18 in einem einzigen Gerät zusamßengefaßt werden. Es wird im folgenden davon ausgegangen, daß sich die Vorrichtung an einem Mähdrescher befindet und deshalb das Gut als Getreide vorliegt und der Gutbehälter von einem Korntank gebildet wird. Auch die sonstigen im folgenden verwendeten Begriffe beziehen sich auf die Anwendung der Vorrichtung 10 an einem Mähdrescher. Wie aus dem oben Geschilderten hervorgeht, ist dies jedoch nur eine unter einer Vielzahl von Anwendungsmöglichkeiten.

Der Rechner 12 ist auf Mikroprozessorbasis aufgebaut und enthält einen Volumenrechner 20, einen Flächenrechner 22, einen Zeitrechner 24 und einen Dichterechner 26, die allgemein als "Slave-Rechner" 28 bezeichnet werden und über herkömmliche Verbindungselemente mit einem Massenrechner 30, der einen "Master-Rechner" darstellt, verbunden sind. In dem Dichterechner 26 ist ein Speicher 32 für die Angaben über die Größe der Dichte und des Schüttkegels verschiedenster Erntegüter bei unterschiedlichen Feuchtegraden und Gutzusammensetzungen vorgesehen, anhand derer die Dichte des geernteten Guts ermittelt und dem Massenrechner 30 zugeführt werden kann.

Die manuelle Eingabeeinheit 14 befindet sich z. B. auf einer Bedienungsplattform eines Mähdreschers und sieht verschiedene Eingabemöglichkeiten vor. So ist es möglich, mittels eines Tastendruckes die zu erntende Fruchart (Weizen, Gerste, Roggen, Hafer, Mais ...) anzugeben. Es ist ferner eine Möglichkeit geschaffen, die Gutfeuchte einzugeben, wobei in diesem Ausführungsbeispiel die Bereiche 5 - 12 %, 13 - 16 %, 17 - 22 % und 22 - 40 % mittels eines Tastendrucks gewählt werden können. Sowohl die Angabe der Fruchtart als auch die der Gutfeuchte werden dem Dichterechner 26 zugeführt.

Die manuelle Eingabeeinheit 14 enthält überdies ein Ziffernfeld 34 mit Tasten für Ziffern von 1 bis 0, so daß innerhalb vorgegebener Grenzen jeder beliebige Wert eingegeben werden kann. In dem Ziffernfeld 34 sind zudem eine Addier- und eine Subtrahiertaste 36 und 38 vorgesehen, mit denen angegeben werden kann, wie der eingegebene Wert verarbeitet werden soll.

Ferner ist die manuelle Eingabeeinheit mit Speichertasten 40 bis 46 versehen, und zwar zur Eingabe des Durchmessers des Rades, mittels dessen die abgeerntete Fläche ermittelt wird, der Schneidwerksbreite, einer Korrektur für den Unterschied zwischen der maximal möglichen und der tatsächlich erzielten Schnittbreite in -cm- und einer Korrektur des Inhalts des Gutbehälters in % oder 1/4-Korntankinhalten. Jeweils nach der Betätigung einer der Speichertasten 40 bis 46 und solange diese niedergedrückt bleibt, kann auf dem Ziffernfeld 34 der geforderte Wert eingegeben werden. Entsprechend dem Zweck der Eingabe sind den Werten dann verschiedene Einheiten, Zentimeter oder aber Prozent zugeordnet.

Während die für den Raddurchmesser, die Schneidwerksbreite und die Korrektur der Schnittbreite eingegebenen Werte dem Flächenrechner 22 zugeleitet werden, wird der für die Korrektur des Inhalts des Gutbehälters erfaßte Wert dem Volumenrechner 20 zugeführt, in dem bereits eine feste Größe für den maximalen Inhalt des Gutbehälters gespeichert ist.

Abweichend von dem Vorbeschriebenen kann anstatt der direkten Eingabe der Gutart und der Gutfeuchte auch eine indirekte Eingabe über Kennziffern erfolgen, die über das Ziffernfeld 34 eingegeben werden. Außerdem können zusätzlich Tasten oder sonstige Eingabemöglichkeiten für die Verschmutzung und/oder die Gutzusamßensetzung (z. B. Hafer und Gerste) geschaffen werden, die dann dem Dichterechner 26 zur Verfügung gestellt werden.

Die Ausgabeeinheit 16 ist in diesem Ausführungsbeispiel mit einer Anzeige 48, einem Drucker 50 und Tasten 52 bis 56 bestückt, wobei nach Drücken der Taste 52 die geerntete Masse überhaupt, mit Taste 54 die geerntete Masse pro Fläche und der Taste 56 die geerntete Masse innerhalb einer bestimmten Zeit angezeigt oder ausgedruckt werden kann. Zur Wahl der Ausgabeart ist ein weiterer nicht gezeigter Schalter vorgesehen.

Jeder der Tasten 52 bis 56 ist eine Lösch-Taste 58 zugeordnet, nach deren Niederdrücken die bisher gespeicherten entsprechenden Sußmendaten in dem Massenspeicher 30 gelöscht werden können.

Die Sensoren 18 umfassen einen Füllstandssensor 60, einen Entladesensor 62 mit einem Zeitverzögerungsrelais 64, einen Drehzahlsensor 66, einen Dreschwerksensor 68 und einen Betriebssensor 70.

Der Füllstandssensor 60 und der Entladesensor 62 geben ihre Signale an den Volumenrechner 20 weiter.

Der Füllstandssensor 60 stellt das in den Gutbehälter geförderte Volumen anhand der Füllhöhe am Rand oder am Schüttkegel fest.

Der Entladesensor 62 stellt fest, ob der Gutbehälter entleert worden ist, und teilt dies dem Volumenrechner 20 mit, damit ein weiteres Gutbehältervolumen hinzugefügt werden kann. Der Entladesensor 62 kann sich z. B. an einem Einschalthebel für eine Entladeschnecke befinden; ohnehin sind herkömmliche Mähdrescher bereits mit einer Anzeige versehen, die einen gerade stattfindenden Entladevorgang anzeigt, von der ein entsprechendes Signal abgeleitet werden kann.

Das Zeitverzögerungsrelais 64 ist zwischen den Entladesensor 62 und den Volumenrechner 20 geschaltet und vermeidet, daß nach einem kurzfristigen Unterbrechen und anschließenden Fortsetzen des Entladevorgangs ein weiteres de facto nicht vorhandenes Gutbehältervolumen hinzuaddiert wird. Die Verzögerungsdauer kann je nach den gegebenen Ernte-und Entladeumständen variiert werden.

Der Drehzahlsensor 66 ist an einem Rad oder an einer Antriebswelle eines Rades zum Fortbewegen des Mähdreschers angebracht und ermittelt die Anzahl deren Umdrehungen, wobei in herkömmlicher Weise eine Unterbrechung des Zählvorgangs stattfindet, wenn der Erntevorgang unterbrochen, z. B. wenn das Schneidwerk angehoben, wird. Der Drehzahlsensor 66 liefert ein Signal in den Flächenrechner 22, das dort mit dem über die manuelle Eingabeeinheit 14 eingegebenen Raddurchmesser und der ebenfalls eingegebenen Schneidwerksbreite und der Korrektur der Schnittbreite verrechnet wird, um die abgeerntete Fläche zu errechnen.

Der Dreschwerk- und der Betriebssensor 68, 70 sind als einfache Schalter ausgebildet, die erfassen, wann das Dreschwerk oder in einem anderen Anwendungsfall irgendein Ernte-oder Förderwerk arbeitet bzw. wann der Mähdrescher oder eine sonstige Maschine überhaupt in Betrieb ist. Der Dreschwerk-und der Betriebssensor 68, 70 wirken auf den Zeitrechner 24 und lösen dort einen Zeiterfassungsvorgang aus.

Der Massenrechner 30 erfaßt je nachdem, welche Angaben an der Ausgabeeinheit 16 gefordert werden, Ausgangssignale des Volumenrechners 20, des Dichterechners 26 und des Flächenrechners 22 oder des Volumenrechners 20, des Dichterechners 26 und des Zeitrechners 24, um sie miteinander zu verknüpfen.

Im folgenden wird ein Beispiel mit konkreten Daten wiedergegeben, anhand dessen die Funktion der erfindungsgemäßen Vorrichtung deutlich wird. Dieses Beispiel ist unter vielen ausgewählt und bezieht sich nur auf die Anwendung bei einem Mähdrescher.

Bevor die erfindungsgemäße Vorrichtung erstmalig in Betrieb genomßen wird, werden entweder werksseitig oder seitens einer Bedienungsperson mittels einer Magnetkarte oder dergleichen die gutspezifischen Angaben und das maximal mögliche Volumen des Erntegutbehälters (im Ausführungsbeispiel 8000 Liter) in den Speicher bzw. in den Volumenrechner 20 geladen. Ebenso wird als Raddurchmesser 182 cm auf dem Ziffernfeld 34 eingeben, während die Speichertaste 40 für den Raddurchmesser niedergedrückt ist, und mittels der Speichertaste 42 wird eine Schneidwerksbreite von 560 cm eingegeben. Möglicherweise werden die Schneidwerksbreite und der Raddurchmesser ebenfalls bereits ab Werk eingestellt.

Für einen Erntevorgang auf einem Feld eines Landwirtes wird dann als Gut "Weizen" und als Feuchtigkeit "13 - 16 %" eingegeben. Schließlich werden, falls dies gewünscht ist, mittels der Löschtasten 58 sämtliche bereits gespeicherte Summenwerte früher ermittelter Massen in dem Massenrechner 30 gelöscht. Die Vorrichtung 10 ist somit bereits betriebsbereit und braucht nicht weiter geeicht zu werden.

Die Erntemaschine beginnt nun einen Erntevorgang, bis die Anzeige "Gutbehälter ist voll" erscheint, fährt zu einer Entladestelle, z. B. einem Anhänger, und entlädt den Gutbehälter. Während des Erntevorgangs wurde in dem Flächenrechner die Anzahl der Radumdrehungen in eine zurückgelegte Wegstrecke umgerechnet und mit der Schneidwerksbreite multipliziert, so daß daraus die abgeerntete Fläche entsteht und dem Massenrechner 30 als Wert zur Verfügung gestellt werden kann. Außerdem hat der Füllstandssensor 60 dem Volumenrechner 20 mitgeteilt, daß der Gutbehälter ganz gefüllt war, was normalerweise einem Volumen von 8000 Litern entspricht, und daß dieses Volumen entleert worden ist, da der Entladesensor 62 einen Entladevorgang registriert hat. Der Dichterechner 26 ermittelt, daß Weizen bei einer Gutfeuchte von 13 - 16 % eine Dichte von 0,75 kg je Liter aufweist. In dem Zeitrechner 24 wurde als Dauer für den Betrieb des Dreschwerks 1 Stunde ermittelt.

Wird nun an der Ausgabeeinheit 16 durch Druck auf die Taste 54 verlangt, die Angabe bereits geernteter Masse pro abgeernteter Fläche anzuzeigen, dann wird der Massenrechner 30 bereits ermittelte Teilwerte aus dem Volumenrechner 20, dem Dichterechner 26 und dem Flächenrechner 22 abrufen und diese entsprechend verarbeiten. Aufgrund des ebenfalls bereits gespeicherten spezifischen Schüttwinkels für Weizen mit dieser Feuchte stellt der Massenrechner 30 dabei fest, daß das tatsächliche Volumen nicht 8000 Liter, sondern nur 7600 Liter beträgt, obwohl der Füllstandssensor 60 8000 Liter angezeigt hat. Nach einer Multiplikation der Dichte mit dem Volumen und einer Division der daraus gewonnenen Masse durch die Fläche kann der Massenrechner 30 dann an der Anzeige 48 6500 kg je ha anzeigen.

Dieser Ermittlungsvorgang wird imßer weitergeführt, und die jeweiligen Werte werden stets aufsußmiert, bis der Mähdrescher das Ende der abzuerntenden Fläche erreicht hat. In dem Fall, daß beim Ernten des letzten Getreiderestes die Schnittbreite des Schneidwerks nicht mehr voll genutzt werden kann, gibt die Bedienungsperson mittels der Speichertaste 44 für die korrigierte Schneidwerksbreite ein, daß ab der Speicherung nur 50 % der Schneidwerksbreite ausgenutzt werden, so daß sich die abgeerntete Fläche entsprechend ändert. Hatte der Mähdrescher außerdem noch Gut einer zuvor abgeernteten, aber nicht zu erfassenden Fläche in dem Gutbehälter, dann kann über die Speichertaste 46 und die Subtrahiertaste 38 eingegeben werden, daß von dem gespeicherten Gutbehältervolumen 1000 Liter abzuziehen sind.

Desgleichen kann eine Ausgabe der Masse pro Dreschwerkzeit unter Zugrundelegung der über den Dreschwerksensor 68 ermittelten Dreschwerkszeit erstellt werden.

## Patentansprüche

1. Verfahren zum Ermitteln der Masse eines Guts, insbesondere bei Erntemaschinen, wobei
a) vor einem Arbeitseinsatz
a1 konstante gutspezifische Angaben bei unterschiedlichen Feuchtegraden unabhängig von der Bergung eines Guts ermittelt und
a2 einem Speicher (32) eingegeben werden und
b) während des Arbeitseinsatzes
b1 dem Speicher (32)
das mittels Sensoren (18) ermittelte Volumen und
die Gutfeuchte eingegeben wird und
b2 die Masse des Guts mittels eines Rechners (12) aus dem erfaßten Volumen und aus den gutspezifischen Angaben ermittelt wird.

2. Verfahren nach Anspruch 1, dadurch gekennzeichnet, daß dem Rechner (12) während des Arbeitseinsatzes über geeignete Mittel variable Größen über die zu erntende Fläche eingegeben werden.

3. Verfahren nach Anspruch 1 oder 2, dadurch gekennzeichnet, daß das Eingangssignal über die Gutfeuchte mittels Sensoren ermittelt oder manuell eingegeben wird.

4. Verfahren nach Anspruch 1, dadurch gekennzeichnet, daß die gutspezifischen Angaben die Größe der Dichte je Gutart enthalten.

5. Verfahren nach Anspruch 1, dadurch gekennzeichnet, daß die gutspezifischen Angaben die Größe des Schüttkegels je Gutart enthalten.

6. Verfahren nach Anspruch 1, dadurch gekennzeichnet, daß die gutspezifischen Angaben die Größe des Schüttkegels in Abhängigkeit von der Gutfeuchte enthalten.

7. Verfahren nach Anspruch 1, dadurch gekennzeichnet, daß das Volumen mittels eines Füllstandssensors (60) in einem Gutbehälter ermittelt wird.

8. Verfahren nach Anspruch 1, dadurch gekennzeichnet, daß ein Korrekturkreis zur Änderung der Flächengrößen und der Volumengrößen vorgesehen ist.

9. Verfahren nach einem oder mehreren der vorherigen Ansprüche, dadurch gekennzeichnet, daß der Rechner (12) als "Master-Slave-Rechner" ausgebildet ist, wobei die "Slave-Rechner" (28) der Ermittlung der abgeernteten Fläche, des Volumens und der Dichte des Guts und der Zeit dienen.

## Claims

1. Method for determining the mass of a material, particularly in harvesting machines, wherein:
a) before a working operation
a1 constant material-specific data at varying moisture contents are determined independently of the harvesting of a material, and
a2 are passed into a memory (32), and
b) during the working operation
b1 the volume, determined by sensors (18), and
the moisture content of the material are fed in
to the memory (32), and
b2 the mass of the material is determined by a computer (12) from the detected volume, and from the material-specific data.

2. Method according to claim 1, characterized in that, during the working operation, variable magnitudes relating to the area to be harvested are input to the computer (12) via appropriate means.

3. Method according to claim 1 or 2, characterised in that the input signal relating to the material's moisture content is determined by means of sensors, or is input manually.

4. Method according to claim 1, characterised in that the material-specific data include the magnitude of density per type of material.

5. Method according to claim 1, characterised in that the material-specific data include the magnitude of the talus cone per type of material.

6. Method according to claim 1, characterised in that the material-specific data include the magnitude of the talus cone in dependence on the moisture content of the material.

7. Method according to claim 1, characterised in that the volume is determined by means of a level sensor (60) in a material container.

8. Method according to claim 1, characterised in that a correction circuit is provided in order to alter the area magnitudes and the volume magnitudes.

9. Method according to one or more of the foregoing claims, characterised in that the computer (12) is designed as a "master-slave computer", the "slave computers" serving to determine the area harvested, the volume and the density of the material and the time.

## Revendications

1. Procédé pour déterminer la masse d'un produit, notamment pour des récolteuses, selon lequel
a) avant une utilisation en travail
a1 des données constantes spécifiques du produit, pour différents degrés d'humidité, indépendamment de la récupération du produit, sont déterminées, et
a2 entrées dans une mémoire (32), et
b) pendant l'utilisation en travail
b1 le volume, déterminé par des capteurs (18), et l'humidité du produit, sont entrés dans la mémoire (32) et
b2 à partir du volume détecté et des données spécifiques du produit, la masse du produit au moyen d'un calculateur (12) est déterminée.

2. Procédé selon la revendication 1, caractérisé en ce que pendant l'utilisation en travail, à l'aide de moyen appropriés des grandeurs variables concernant la surface à récolter, sont entrées dans le calculateur (12).

3. Procédé selon la revendication 1 ou 2, caractérisé en ce que le signal d'entrée pour l'humidité du produit est déterminé à l'aide de capteurs ou entré manuellement.

4. Procédé selon la revendication 1, caractérisé en ce que les données spécifiques du produit comprennent la valeur de la densité selon le type de produit.

5. Procédé selon la revendication 1, caractérisé en ce que les données spécifiques du produit comprennent la valeur du cône de déversement selon le type de produit.

6. Procédé selon la revendication 1, caractérisé en ce que les données spécifiques du produit comprennent la valeur du cône de déversement en fonction de l'humidité du produit.

7. Procédé selon la revendication 1, caractérisé en ce que le volume est déterminé au moyen d'un capteur de niveau de remplissage (60) dans un récipient de produit.

8. Procédé selon la revendication 1, caractérisé en ce qu'un circuit de correction est prévu pour modifier les valeurs de surface et les valeurs de volume.

9. Procédé selon l'une quelconque des revendications précédentes, caractérisé en ce que le calculateur (12) est conçu comme calculateur à association "maître-esclave", les calculateurs "esclave" (28) servant à la détermination de la surface récoltée, du volume et de la densité du produit, et du temps passé.
